(19) Europäisches Patentamt / European Patent Office / Office européen des brevets

(11) **EP 2 805 085 B1**

(12) **EUROPÄISCHE PATENTSCHRIFT**

(45) Veröffentlichungstag und Bekanntmachung des Hinweises auf die Patenterteilung:
**26.10.2016 Patentblatt 2016/43**

(21) Anmeldenummer: **13700147.5**

(22) Anmeldetag: **09.01.2013**

(51) Int Cl.:
*F16J 1/16* <sup>(2006.01)</sup>   *B23B 41/04* <sup>(2006.01)</sup>
*F02F 3/00* <sup>(2006.01)</sup>

(86) Internationale Anmeldenummer:
**PCT/EP2013/050266**

(87) Internationale Veröffentlichungsnummer:
**WO 2013/107672 (25.07.2013 Gazette 2013/30)**

(54) **KOLBEN**

PISTON

PISTON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.01.2012 DE 102012200749**

(43) Veröffentlichungstag der Anmeldung:
**26.11.2014 Patentblatt 2014/48**

(73) Patentinhaber: **Mahle International GmbH**
**70376 Stuttgart (DE)**

(72) Erfinder: **EMMRICH, Dieter**
**71332 Waiblingen (DE)**

(74) Vertreter: **BRP Renaud & Partner mbB**
**Rechtsanwälte Patentanwälte**
**Steuerberater**
**Königstraße 28**
**70173 Stuttgart (DE)**

(56) Entgegenhaltungen:
**DE-A1- 1 526 570      DE-A1- 2 152 462**
**DE-A1-102008 063 945   DE-A1-102009 056 920**
**JP-A- H10 103 514      US-A- 2 990 226**
**US-A1- 2006 219 066**

**Beschreibung**

Die vorliegende Erfindung betrifft einen Kolben für einen Verbrennungsmotor mit Bolzenbohrungen zur Aufnahme eines Kolbenbolzens gemäß dem Oberbegriff des Anspruchs 1. Die Erfindung betrifft außerdem ein Verfahren zur Herstellung eines derartigen Kolbens.

Aus der DE 1 650 206 A ist ein gattungsgemäßer Kolben für einen Verbrennungsmotor mit Bolzenbohrungen zur Aufnahme eines Kolbenbolzens bekannt, wobei die Bolzenbohrungen zur Lastoptimierung queroval zur Längsachse des Kolbens ausgebildet sind. Durch die querovale Ausbildung der Bolzenbohrungen soll insbesondere eine zuverlässige Ölversorgung während des Betriebs des Verbrennungsmotors gewährleistet werden. Die querovale Bolzenbohrung soll zudem geräuschdämpfend wirken und die unterschiedlichen Wärmedehnungen des Kolbens und des Bolzens aufnehmen können.

Aus der US 2,990,226 ist wiederum ein gattungsgemäßer Kolben mit einer querovalen Bolzenbohrung bekannt.

Des Weiteren offenbart JP10103514 einen Kolben gemäß dem Oberbegriff des Anspruchs 1.

Aus der DE 36 09 019 C1 ist ein Verfahren zur Herstellung einer Bolzenbohrung eines Tauchkolbens bekannt, bei dem in die Bolzenbohrungen vom Kolbeninneren ausgehend taschenartige Ausnehmungen zur Vermeidung von Nabenrissen eingeformt sind. In diesen Taschen wird bei Kolben, bei denen der Pleuel durch die Naben des Kolbens in Richtung der Kurbelwellenlängsachse geführt ist, vom Pleuelkopf aus Schmieröl eingeführt. Um dieses auch bei in die Bolzenbohrung geschlossen eingeformten Taschen bei möglichst geringer Verminderung der Bolzenbohrungsfläche an das radial außenliegende Ende der Bolzenbohrung führen zu können, wird mit Hilfe einer Lageveränderung eines die Taschen einarbeitenden Fräswerkzeugs während des Einarbeitens eine nach radial außen führende und als Ölkanal dienende Nut an die Taschen angeformt. Das Anformen dieser Nut benötigt jedoch einen zweiten Arbeitsgang.

Auch aus der US 2007/0095200 A1 ist ebenfalls ein gattungsgemäßer Kolben mit einer querovalen Bolzenbohrung bekannt, wobei die dort erwähnten Taschen ebenfalls in einem separaten Arbeitsgang hergestellt werden müssen.

Die vorliegende Erfindung beschäftigt sich mit dem Problem, für einen Kolben der gattungsgemäßen Art eine verbesserte oder zumindest eine alternative Ausführungsform anzugeben, die sich durch eine rationelle Herstellung, eine hohe Belastbarkeit und ein verbessertes Schmierverhalten auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem an sich bekannten Kolben für einen Verbrennungsmotor die zur Aufnahme eines Kolbenbolzens vorgesehenen Bolzenbohrungen queroval auszuführen und zwar bei $\alpha=0°$, das heißt im Zenit, und bei $\alpha=180°$, das heißt im Nadir, kreiszylindrisch und bei $\alpha$ ca. 90° bzw. 270° (Äquator) oval mit einem Ölhaltevolumen, wobei ein Übergang zwischen dem Äquator und dem Zenit bzw. zwischen dem Äquator und dem Nadir stetig und differenzierbar, das heißt ohne Kanten verläuft. Durch die spezielle Ausführungsform der Bolzenbohrungen liegen sich die Kontaktflächen zwischen Kolben und Bolzen am Zenit (und Nadir) quasi parallel gegenüber, wodurch sich der flächige Kontakt zwischen Bolzen und Kolben zur Übertragung der Gasdruckbelastung direkt einstellen kann, ohne eine zusätzliche Biegung des Kolbens um den Bolzen, welche zu einer Belastungserhöhung des Kolbens führen würde. Erreicht wird dies, indem die Bolzenbohrungen zumindest im Bereich des Zenits annähernd kreiszylindrisch ausgebildet werden, ohne dass sich dabei im Übergangsbereich zwischen dem Zenit und dem Äquator Kanten ausbilden, wie dies beispielsweise aus dem Stand der Technik (US 2007/0095200 A1, DE 36 09 019 A1, US 2,990,226 A) der Fall ist. Bei der erfindungsgemäßen querovalen Bolzenbohrung handelt es sich somit um eine korrigierte querovale Bolzenbohrung, die beispielsweise linearoval oder doppeltoval ausgebildet ist. Hergestellt werden kann eine derartige erfindungsgemäße Bolzenbohrung mittels einer Drehmaschine, bei welcher entweder der zu bohrende Kolben oder das Drehwerkzeug während des eigentlichen Bohr- bzw. Drehvorgangs bei jeder Umdrehung ausgelenkt wird. Von besonderem Vorteil bei dieser Herstellungsweise ist darüber hinaus, dass die korrigierte querovale Bolzenbohrung in einem einzigen Arbeitsschritt hergestellt werden kann und somit die Ölhaltetaschen im Bereich des Äquators nicht, wie bisher üblich, in einem separaten, zweiten Arbeitsschritt gedreht bzw. gefräst werden müssen. Durch die querovale Ausbildung kann auch eine deutlich verbesserte Schmierung des Bolzens erzielt werden, als dies beispielsweise mit rein zylindrischen Bolzenbohrungen der Fall wäre. Durch die erfindungsgemäße kann in der Nabenbohrung ein Ölhaltevolumen geschaffen werden, das keine Kanten hat und den Kolbenboden nicht so hoch belastet wie eine klassische Querovalität.

Bei einer vorteilhaften Weiterbildung der erfindungsgemäßen Lösung weisen die Bolzenbohrungen bei 340° < $\alpha$ < 20° und bei 130° < $\alpha$ < 230° eine radiale Abweichung von der Kreisform von $r_d$ < 2 $\mu$m auf. Sowohl im Zenitbereich als auch im Bereich des Nadirs ist somit eine nahezu kreiszylindrische Form der Bolzenbohrung gewährleistet und damit ein flächiger Kontakt zwischen Kolben und Bolzen ohne eine zusätzliche Kolbenbiegung um den zunehmenden Kontaktspalt durch die Ovalität zu schließen. Dadurch wird eine zusätzliche Belastung durch die Kolbenbiegung um den Bolzen des sowohl thermisch wie auch mechanisch hoch belasteten Kolbenbodens erreicht. (Dies ist der typische Nachteil konventioneller querovaler Nabenbohrungen)

Zweckmäßig weisen die Bolzenbohrungen bei $\alpha$ ca. 90° und bei $\alpha$ ca. 270°, das heißt im Äquatorbereich, eine radiale Abweichung von der Kreisform von 10 < $r_d$ < 40 μm auf. Hieraus ist eindeutig zu erkennen, dass im Bereich des Äquators der Durchmesser der Bolzenbohrung deutlich größer ist und daher deutlich vom Durchmesser am Nadir und Zenit abweicht, wobei durch die radiale Abweichung die für die Schmierung erforderlichen Ölhaltetaschen bzw. Ölhaltevolumen geschaffen werden können. Derartige Ölhaltevolumen sind insbesondere für die ausreichende Schmierung und damit auch ein geräuscharmes Arbeiten des Kolbens erforderlich.

Bei einer weiteren vorteilhaften Ausführungsform der erfindungsgemäßen Lösung weist die Bolzenbohrung zusätzlich zur Querovalität auch eine Hochovalität auf. Hierdurch werden die maximalen Flächenpressungen in der Bohrung z.B. in die Bereiche +15° und -15° verschoben. Die resultierenden Kräfte auf den Kolben können die Kolbenbiegung abermals reduzieren und den Kolbenboden weiter entlasten. Durch eine derartige Hochovalität kann insbesondere auch ein Krafteinleitungspunkt aus dem Zenit bzw. dem Nadir in Nachbarbereiche verschoben werden.

Bei einer weiteren vorteilhaften Ausführungsform der erfindungsgemäßen Lösung sind die Bolzenbohrungen zusätzlich mit symmetrischen oder asymmetrischen Trompeten ausgebildet. Diese Trompetenformen haben grundsätzlich den Sinn, Kantenpressungen und andere Druckerhöhungen, die u.a. durch die Bolzendurchbiegung und Ovalisierung unter Last entstehen, zu vermeiden. Eine asymmetrische Ausbildung lässt insbesondere eine unterschiedliche Ausbildung der Nadir und Zenitseite zu. Dies hat den Vorteil, dass die Aufweitungen der Trompeten an die unterschiedlichen Belastungen durch Gas- und Massenkräfte angepasst werden können und ggf. eine asymmetrische Nabe für ein Trapez- oder Stufenpleuel berücksichtigt werden kann.

Die Erfindung beruht weiter auf dem allgemeinen Gedanken, die erfindungsgemäße sonderquerovale Bolzenbohrungen dadurch herzustellen, dass ein dem Bohren überlagertes, gleichzeitiges Schwingen des Kolbens bzw. des Bohrers durchgeführt wird. Durch den während des Bohrens schwingenden Kolben bzw. Bohrer können insbesondere die Ölhaltevolumen im Äquatorbereich zusammen mit dem Bohren bzw. Drehen der Bolzenbohrung hergestellt werden, so dass diese nicht - wie bisher üblich - in einem separaten und dadurch aufwändigen zweiten Arbeitsschritt hergestellt werden müssen. Alternativ kann eine solche Form auch über eine magnetisch gelagerte Bohrspindel in einem Arbeitsgang hergestellt werden. Voraussetzung ist auch hierzu die stetige und differenzierbare Form der Bolzenbohrung. Hierdurch kann der erfindungsgemäße Kolben fertigungstechnisch rationell und dadurch vergleichsweise kostengünstig bei trotzdem äußerst hoher Qualität hergestellt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, die nur durch den Schutzumfang der Ansprüche definiert wird.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,

Fig. 1    eine Ansicht auf einen erfindungsgemäßen Kolben,

Fig. 2    eine Diagrammdarstellung zur Verdeutlichung der erfindungsgemäßen sonderquerovalen Bolzenbohrung; zur Illustration überzeichnet,

Fig. 3    eine Darstellung zur Verdeutlichung von radialen Abweichungen bei unterschiedlichen querovalen Bolzenbohrungen,

Fig. 4    eine Darstellung wie in Fig. 2, jedoch zusätzlich mit einer hochovalen Bolzenbohrung.

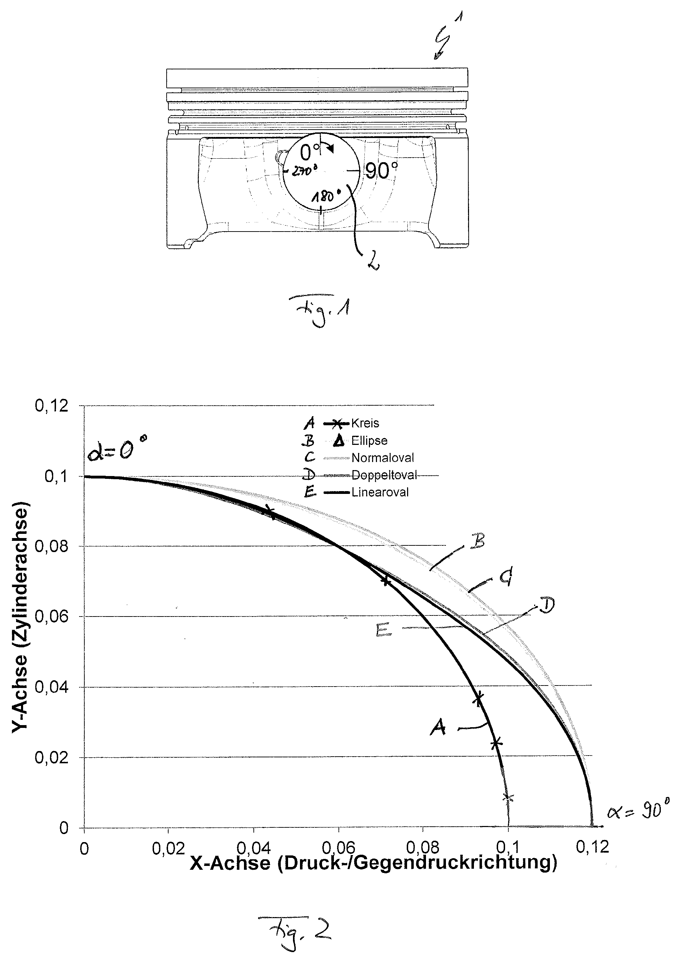

Entsprechend der Fig. 1, weist ein erfindungsgemäßer Kolben 1 für einen im Übrigen nicht gezeigten Verbrennungsmotor eine Bolzenbohrung 2 zur Aufnahme eines ebenfalls nicht gezeigten Kolbenbolzens auf, wobei die Bolzenbohrung 2 queroval zur Längsachse, das heißt im vorliegenden Fall zur Vertikalachse, des Kolbens 1 ausgebildet sind. Erfindungsgemäß ist nun die Bolzenbohrung 2 bei $\alpha$ = 0°, das heißt im Zenit, und bei $\alpha$=180°, das heißt im Nadir, kreiszylindrisch ausgebildet, wogegen sie bei $\alpha$=90° und 270°, das heißt im Äquatorbereich, oval mit einem Ölhaltevolumen, beispielsweise in der Art von Ölhaltetaschen, ausgebildet ist. Ein Übergang zwischen dem Äquator und dem Zenit bzw. dem Äquator und dem Nadir ist dabei stetig und differenzierbar, das heißt dieser Übergang verläuft ohne Kanten. Aufgrund der insbesondere im Zenitbereich und im Nadirbereich kreiszylindrischen Form der Bolzenbohrung 2 weist diese eine vergleichsweise große Fläche auf, über welche sie mit dem Kolbenbolzen kraftübertragend nahezu parallel in Kontakt steht. Vorzugsweise weist deshalb die Bolzenbohrung 2 bei 345° < $\alpha$ < 45° und bei 135° < $\alpha$ < 225°

eine im Wesentlichen zylindrische Form auf. Dies bietet im Vergleich zu bisher aus dem Stand der Technik bekannten querovalen Bolzenbohrungen den großen Vorteil, dass die sonst bei ovalen Nabenbohrungen auftretende Kolbenbiegung zum Schließen des vergrößerten Kontaktspaltes vermieden werden kann.

Generell kann die Bolzenbohrung 2 beispielsweise linearoval oder doppeltoval ausgebildet sein. Im Folgenden wird zwar immer nur von einer Bolzenbohrung 2 gesprochen, wobei es selbstverständlich klar ist, dass je Kolben 1 üblicherweise zwei fluchtend zueinander angeordnete Bolzenbohrungen 2 vorgesehen sind.

Betrachtet man die Fig. 2, so kann man einen Ausschnitt der Bolzenbohrung 2 zwischen $\alpha=0°$ und $\alpha=90°$ erkennen, wobei die erfindungsgemäße sonderquerovale Bolzenbohrung 2 hier mit den Linien D (doppeltoval) und E (linearoval) beschrieben ist. Es fällt dabei auf, dass sowohl die doppeltovale als auch die linearovale Kennlinie D, E zwischen $\alpha=0$ und $\alpha$ nahezu 45° identisch mit der Kreisbohrung A sind, woraus die vergleichsweise konstante Spaltweite im Kontaktbereich zwischen Kolben und Bolzen resultiert. Die Linien D und E sind somit im Bereich zwischen $\alpha=0$ und $\alpha$ ca. 45° der Kreislinie A angenähert.

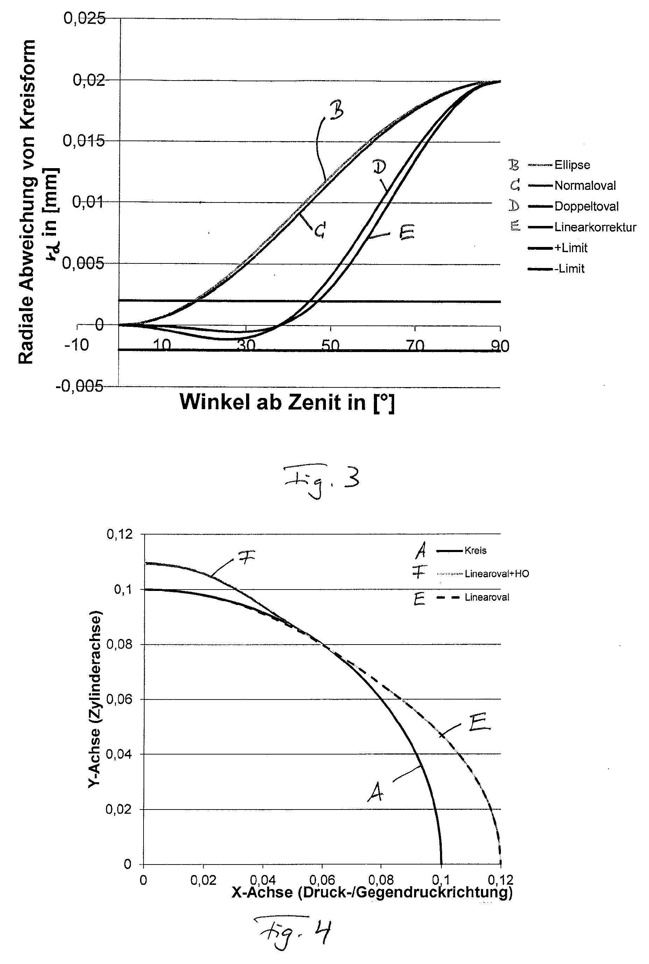

Zwischen $\alpha=45°$ und $\alpha=90°$ weicht jedoch die erfindungsgemäße Kennlinie D, E der erfindungsgemäßen Bolzenbohrung 2 deutlich von der Kreisform ab, so dass bei $\alpha=90°$ bereits eine radiale Abweichung $r_d$ von ca. 20 $\mu$m vorhanden ist. Dies ist auch nochmals in Fig. 3 klar dargestellt, in welcher die radiale Abweichung $r_d$ von der Kreisform in Millimetern dargestellt ist. In einem Bereich von 340° < $\alpha$ < 20° und 130° < $\alpha$ < 32° beträgt eine radiale Abweichung $r_d$ von der Kreisform weniger als 2 $\mu$m, wogegen sie im Äquatorbereich, das heißt im Bereich bei a ungefähr 90° bzw. 270° größer als 10 $\mu$m und bis zu 40 $\mu$m aufweisen kann. Selbstverständlich ist dabei, dass der Bolzenbohrung 2 sowohl eine symmetrische als auch asymmetrische Innen- und/oder Außenformbohrung (Trompete) überlagert werden kann. Betrachtet man nochmals die Fig. 3, so kann man erkennen, dass bei der erfindungsgemäß hergestellten Bolzenbohrung 2, das heißt mit den Kennlinien D und E für doppeltoval bzw. linearoval eine radiale Abweichung $r_d$ von mehr als 2 $\mu$m erst ab einem Winkel $\alpha$ von ca. 45° einsetzt, wogegen diese bei einer Ellipse B bzw. bei einem Normaloval C bereits nach 20° einsetzt und dadurch eine verstärkte Kolbenbiegung hervorruft. Selbstverständlich sind dabei die gemäß den Fig. 2 bis 4 dargestellten Diagramme zur Veranschaulichung überzeichnet dargestellt.

Um die sonderquerovale Bolzenbohrung 2 rechnerisch beschreiben zu können und um eine kreisähnliche Form in den Bereichen um Zenit und Nadir zu erhalten, wird die mathematische Beschreibung durch eine Korrektur überlagert, z.B. wird für ein Doppeltoval die Ovalität der Bolzenbohrung 2 beispielsweise wie folgt definiert:

$$h_K\alpha = 0{,}5H*(1-\cos(2\alpha)) + k\alpha \quad \text{mit} \quad k\alpha = 0{,}5*Kt*(1-\cos(4\alpha))$$

mit: H radialer Ovalitätsnennwert [mm] mit Vorzeichen,
$h\alpha$ (radiale) Ovalität bei Winkel $\alpha$ [mm],
$h_K\alpha$ korrigierte (radiale) Ovalität bei Winkel $\alpha$ [mm],
$\alpha$ Winkel,
$Kt$ Korrekturwert.

Der erste Summand entspricht dabei der klassischen Querovalität.

Alternativ hierzu kann die Ovalität der Bolzenbohrung 2 auch wie folgt definiert sein:

$$h_K\alpha = 0{,}5*H(1-\cos(2\alpha)) + k\alpha \quad \text{mit} \quad k\alpha = 0{,}5*Kt*(1-\cos(4\alpha))*|\sin\alpha|$$

mit: H radialer Ovalitätsnennwert [mm] mit Vorzeichen,
$h\alpha$ (radiale) Ovalität bei Winkel $\alpha$ [mm],
$h_K\alpha$ korrigierte (radiale) Ovalität bei Winkel $\alpha$ [mm],
$\alpha$ Winkel,
$Kt$ Korrekturwert.

Diese Form ist bei bestimmten Fertigungsverfahren vorteilhaft und wird Linearkorrektur genannt. Betrachtet man die Fig. 4, so kann man erkennen, dass neben der reinen Querovalität die Bolzenbohrung 2 auch eine Hochovalität HO aufweisen kann, die gemäß der Kennlinie F bezeichnet ist.

Mit der erfindungsgemäßen Bolzenbohrung 2 ist es möglich, durch die nahezu konstante Spaltbreite im Zenitbereich und im Nadirbereich, das heißt bei $\alpha$ ca. 0° und 180° den Kolben besser abzustützen und dadurch die Belastungsfähigkeit deutlich zu steigern. Durch die Querovalität können im Bereich von $\alpha=90°$ bzw. $\alpha=270°$ Ölvolumen geschaffen werden, die eine verbesserte Schmierung bewirken. Die Idee ist dabei, die Querovalität so zu bilden, dass sie sich bei 0° und 180°Uhr wie eine zylindrische Nabenbohrung verhält (=gut für den Kolbenboden), trotzdem aber das Ölhaltevolumen der Querovalität bei 90 und 270° vorhält, um durch eine bessere Schmierung die Nabe belastbarer zu machen als mit einer zylindrischen Formbohrung. Ein Vorteil gegenüber Slots o.ä. ist, dass kein zusätzlicher Arbeitsgang für dieses Volumen benötigt wird und darüber hinaus keine Kanten in der Nabenbohrung entstehen. Eine solche Formbohrung kann zum Beispiel durch eine entsprechende Wahl der Parameter der o.g. mathematischen Beschreibungen oder ähnlicher erreicht werden. Durch den stetigen Übergang vom Zenit in den Äquator bzw. vom Äquator in den Nadir entfallen insbesondere hier aus dem Stand der Technik bekannte Kanten, wodurch ein vergleichsweise geräuscharmer und ruhiger Betrieb des Kolbens möglich ist. Hergestellt werden kann die erfindungsgemäße Bolzenbohrung 2 durch ein dem Bohren überlagertes und gleichzeitiges Schwingen des Kolbens 1 bzw. des Bohrers, so dass die erfindungsgemäße sonderquerovale Bolzenbohrung 2 in einem einzigen Arbeitsschritt und damit fertigungstechnisch einfach und kostengünstig hergestellt werden kann. Insbesondere entfällt dabei ein nachträgliches Fräsen bzw. Drehen der Ölhaltevolumen in der Kolbennabe. Mit der erfindungsgemäßen sonderquerovalen Bolzenbohrung 2 können aufgrund der reduzierten Belastung auch leichtere Kolbenbolzen eingesetzt werden, wodurch die oszillierende Masse und damit der Energieaufwand zum Betrieb des Verbrennungsmotors reduziert werden können.

Konkret können bei der Herstellung einer erfindungsgemäßen Bolzenbohrung 2 mit einem Durchmesser von D = 2 cm für Werte von H (radialer Ovalitätskennwert) und $Kt$ (Korrekturwert) folgende Werte gewählt werden:

|  | normaloval | linearoval | doppeltoval | hochoval |
|---|---|---|---|---|
| H | 20μm | 20μm | 20μm | 20μm |
| $Kt$ | 0μm | -8μm | -8μm | -8μm bis +10μm im Bereich zw. -90° und 270° |

## Patentansprüche

1.  Kolben (1) für einen Verbrennungsmotor mit Bolzenbohrungen zur Aufnahme eines Kolbenbolzen, wobei die

    - die Bolzenbohrungen (2) queroval zur Längsachse des Kolbens (1) ausgebildet sind,
    - die Bolzenbohrungen (2) bei $\alpha=0°$ (Zenit) und bei $\alpha=180°$ (Nadir) kreiszylindrisch und bei $\alpha=90°$und $\alpha=270°$(Äquator) oval mit einem Ölhaltevolumen ausgebildet sind,
    - ein Übergang zwischen dem Äquator und dem Zenit bzw. zwischen dem Äquator und dem Nadir stetig und differenzierbar, das heißt ohne Kanten verläuft,

    **dadurch gekennzeichnet,**
    **dass** die Ovalität der Bolzenbohrungen (2) wie folgt definiert ist,

    $$h_K\alpha = 0{,}5*H(1-\cos(2\alpha)) + k\alpha \quad \text{mit} \quad k\alpha = 0{,}5*Kt*(1-\cos(4\alpha))$$

    oder

    $$h_K\alpha = 0{,}5*H(1-\cos(2\alpha)) + k\alpha \quad \text{mit} \quad k\alpha = 0{,}5*Kt*(1-\cos(4\alpha))*|\sin\alpha|$$

    jeweils

    mit: H radialer Ovalitätsnennwert [mm] mit Vorzeichen,
    h$\alpha$ (radiale) Ovalität bei Winkel $\alpha$ [mm],
    h$_K\alpha$ korrigierte (radiale) Ovalität bei Winkel $\alpha$ [mm],
    $\alpha$ Winkel,
    $Kt$ Korrekturwert.

2.  Kolben nach Anspruch 1,
    **dadurch gekennzeichnet,**
    **dass** die Bolzenbohrungen (2) bei 345° < $\alpha$ < 45° und 135° < $\alpha$ < 225° eine im Wesentlichen zylindrische Form aufweisen.

**3.** Kolben nach Anspruch 1 oder 2,
**dadurch gekennzeichnet,**
**dass** die Bolzenbohrungen (2) linearoval oder doppeltoval ausgebildet sind.

**4.** Kolben nach einem der Ansprüche 1 bis 3,
**dadurch gekennzeichnet,**
**dass** die Bolzenbohrungen (2) bei 340° < $\alpha$ < 20° und 130 < $\alpha$ < 230° eine radiale Abweichung von der Kreisform von $r_d$ < 2 $\mu$m aufweisen.

**5.** Kolben nach einem der Ansprüche 1 bis 4,
**dadurch gekennzeichnet,**
**dass** die Bolzenbohrungen (2) bei $\alpha \sim$ 90° und $\alpha \sim$ 270° eine radiale Abweichung von der Kreisform von 10 < $r_d$ < 50 $\mu$m aufweisen.

**6.** Kolben nach einem der Ansprüche 1 bis 5,
**dadurch gekennzeichnet,**
**dass** die Bolzenbohrung (2) zusätzlich zur Querovalität auch eine Hochovalität (HO) aufweist.

**7.** Kolben nach einem der Ansprüche 1 bis 6,
**dadurch gekennzeichnet,**
**dass** zumindest einer Bolzenbohrung (2) eine Innen und/oder eine Außenformbohrung überlagert ist, die insbesondere symmetrisch oder asymmetrisch ausgebildet ist.

**8.** Herstellungsverfahren eines Kolbens (1) nach einem der vorangehenden Ansprüche, bei dem die Bolzenbohrungen (2) queroval gebohrt werden und zwar durch ein dem Bohren überlagertes, gleichzeitiges Schwingen des Kolbens (1) bzw. eines Bohrers.

**9.** Herstellungsverfahren eines Kolbens (1) nach einem der Ansprüche 1 bis 7, bei dem die Bolzenbohrungen (2) queroval gebohrt werden und zwar durch eine magnetisch gelagerte Bohrspindel, die synchron zur Drehung radial ausgelenkt wird.

**Claims**

**1.** A piston (1) for an internal combustion engine, the piston comprising pin bores for accommodating a piston pin, wherein

- the pin bores (2) are formed in a transversely oval manner to a longitudinal axis of the piston (1),
- the pin bores (2) are formed in a circular cylindrical manner at a zenith of $\alpha$=0° and at a nadir of $\alpha$=180°, and in an oval manner with an oil-holding volume at an equator of $\alpha$=90° and $\alpha$=270°,
- a transition between the equator and the zenith and between the equator and the nadir runs in a continuous and differentiable manner, i.e. without edges,

**characterized in that**
the ovality of the pin bores (2) is defined as follows,

$$h_K\alpha=0.5*H(1-\cos(2\alpha))+k\alpha \text{ where } k\alpha=0.5*Kt*(1-\cos(4\alpha))$$

or

$$h_K\alpha=0.5*H(1-\cos(2\alpha))+k\alpha \text{ where } k\alpha=0.5*Kt*(1-\cos(4\alpha))*|\sin\alpha|$$

wherein

H is a signed radial ovality nominal value in mm,

h$\alpha$ is a (radial) ovality at angle $\alpha$ in mm,
h$_K\alpha$ is a corrected (radial) ovality at angle $\alpha$ in mm,
$\alpha$ is the angle,
*Kt* is a correction value.

2. The piston according to claim 1,
**characterized in that**
the pin bores (2) have a substantially cylindrical shape at 345° < $\alpha$ < 45° and at 135° < $\alpha$ < 225°.

3. The piston according to claim 1 or 2,
**characterized in that**
the pin bores (2) are formed in a linearly oval or double-oval manner.

4. The piston according to any of claims 1 to 3,
**characterized in that**
the pin bores (2) at 340° < $\alpha$ < 20° and 130 < $\alpha$ < 230° have a radial deviation from the circular shape of $r_d$< 2 $\mu$m.

5. The piston according to any of claims 1 to 4,
**characterized in that**
the pin bores (2) at $\alpha$ ~ 90° and $\alpha$ ~ 270° have a radial deviation from the circular shape of 10 < $r_d$ < 50 $\mu$m.

6. The piston according to any of claims 1 to 5,
**characterized in that**
the pin bore (2) includes a vertical ovality (HO) in addition to the transverse ovality.

7. The piston according to any of claims 1 to 6,
**characterized in that**
an inner and/or outer shaped bore is superposed on at least one pin bore (2), the inner and/or outer shaped bore being formed symmetrically or asymmetrically.

8. A method for producing a piston (1) according to any of the preceding claims, the method comprising drilling pin bores (2) in a transversely oval manner via a simultaneous oscillation of the piston (1) or a drill superposed on the drilling.

9. A method for producing a piston (1) according to any of claims 1 to 7, the method comprising drilling pin bores (2) in a transversely oval manner using a magnetically mounted drilling spindle to deflect radially synchronously with a rotation of the piston.

**Revendications**

1. Piston (1) pour un moteur à combustion avec des alésages d'axe pour la réception d'un axe de piston, dans lequel

   - les alésages d'axe (2) sont réalisés de manière ovale transversale par rapport à l'axe longitudinal du piston (1),
   - les alésages d'axe (2) sont réalisés pour $\alpha$=0° (zénith) et pour $\alpha$=180° (nadir) de manière cylindrique circulaire et pour $\alpha$=90° et $\alpha$=270° (équateur) de manière ovale avec un volume de rétention d'huile,
   - une transition se déroule de manière progressive et différentiable entre l'équateur et le zénith ou entre l'équateur et le nadir, autrement dit sans arêtes,

   **caractérisé en ce que**
   l'ovalité des alésages d'axe (2) est définie comme suit,

   $$h_K\alpha=0,5*H(1-\cos(2\alpha)) + k\alpha \text{ avec } k\alpha=0,5*Kt*(1-\cos(4\alpha))$$

   ou

$$h_K\alpha = 0{,}5 * H(1-\cos(2\alpha)) + k\alpha \text{ avec } k\alpha = 0{,}5 * Kt * (1-\cos(4\alpha)) * |\sin\alpha|$$

respectivement

avec : H valeur nominale d'ovalité radiale [mm] avec signe,
$h\alpha$ ovalité (radiale) pour un angle $\alpha$ [mm],
$h_K\alpha$ ovalité (radiale) corrigée pour un angle $\alpha$ [mm],
$\alpha$ angle,
Kt valeur de correction.

2. Piston selon la revendication 1,
**caractérisé en ce que**
les alésages d'axe (2) pour 345° < $\alpha$ < 45° et 135° < $\alpha$ < 225° présentent une forme sensiblement cylindrique.

3. Piston selon la revendication 1 ou 2,
**caractérisé en ce que**
les alésages d'axe (2) sont réalisés de manière ovale linéaire ou double ovale.

4. Piston selon l'une quelconque des revendications 1 à 3,
**caractérisé en ce que**
les alésages d'axe (2) pour 340° < $\alpha$ < 20° et 130° < $\alpha$ < 230° présentent un écart radial par rapport à la forme circulaire de $r_d$ < 2 $\mu$m.

5. Piston selon l'une quelconque des revendications 1 à 4,
**caractérisé en ce que**
les alésages d'axe (2) pour $\alpha \sim$ 90° et $\alpha \sim$ 270° présentent un écart radial par rapport à la forme circulaire de 10 < $r_d$ < 50 $\mu$m.

6. Piston selon l'une quelconque des revendications 1 à 5,
**caractérisé en ce que**
l'alésage d'axe (2) présente en plus de l'ovalité transversale également une ovalité verticale (HO).

7. Piston selon l'une quelconque des revendications 1 à 6,
**caractérisé en ce que**
un alésage de forme extérieur et/ou intérieur, qui est réalisé en particulier de manière symétrique ou asymétrique, est superposé à au moins un alésage d'axe (2).

8. Procédé de fabrication d'un piston (1) selon l'une quelconque des revendications précédentes, où les alésages d'axe (2) sont réalisés de manière ovale transversale et ce par un balancement simultané superposé à l'alésage du piston (1) ou d'un foret.

9. Procédé de fabrication d'un piston (1) selon l'une quelconque des revendications 1 à 7, où les alésages d'axe (2) sont réalisés de manière ovale transversale et ce par une broche de perçage logée de manière magnétique, qui est déviée radialement de manière synchrone par rapport à la rotation.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1650206 A
- US 2990226 A
- JP 10103514 B
- DE 3609019 C1
- US 20070095200 A1
- DE 3609019 A1